# EUROPÄISCHE PATENTSCHRIFT

(11) **EP 0 712 430 B1**
(45) Veröffentlichungstag und Bekanntmachung des Hinweises auf die Patenterteilung: **18.11.1998**
(21) Anmeldenummer: 94926168.9
(22) Anmeldetag: 09.08.1994
(51) Int. Cl.: C09B 67/28

(54) **LEUKOINDIGO-PRÄPARATIONEN IN GRANULATFORM**
GRANULAR INDIGO WHITE PREPARATIONS
PREPARATIONS DE LEUCO-INDIGO EN GRANULES

(30) Priorität: 13.08.1993 DE 4327221
(43) Veröffentlichungstag der Anmeldung: 22.05.1996
(73) Patentinhaber: BASF AKTIENGESELLSCHAFT, 67056 Ludwigshafen (DE)
(72) Erfinder: GAENG, Manfred, D-67240 Bobenheim-Roxheim (DE); MIEDERER, Peter, D-67454 Hassloch (DE); SCHULTZ, Peter, D-67098 Bad Duerkheim (DE)
(86) Internationale Anmeldenummer: EP9402637
(87) Internationale Veröffentlichungsnummer: WO9505421

(56) Entgegenhaltungen:
- DE-C- 200 914
- DE-C- 245 623
- FR-A- 360 447
- FR-A- 417 071
- US-A- 2 159 930

## Beschreibung

Die vorliegende Erfindung betrifft neue Leukoindigo-Präparationen in Granulatform, enthaltend als wesentliche Bestandteile Leukoindigo und Alkalihydroxid.

Weiterhin betrifft die Erfindung die Herstellung dieser Leukoindigo-Präparationen sowie ihre Verwendung zum Färben von cellulosehaltigem Textilmaterial.

Indigo stellt einen seit langer Zeit bekannten Küpenfarbstoff dar, der zum Färben von cellulosehaltigem Textilmaterial, insbesondere von Baumwoll-Kettgarnen für Blue-denim-Artikel, eingesetzt wird.

Zum Färben muß der wasserunlösliche Indigo zunächst durch Reduktion (Verküpen) in die wasserlösliche Leukoform überführt werden, die dann nach dem Aufziehen auf das zu färbende Material wieder zum Pigment oxidiert wird.

Bei den üblichen Färbeverfahren wird Indigo in einem dem Färbebad vorgelagerten Behälter in alkalischem Medium durch Zugabe von anorganischen Reduktionsmitteln wie Natriumdithionit und Thioharnstoffdioxid oder auch organischen Reduktionsmitteln wie Hydroxyaceton verküpt. Zusätzliche maschinenabhängige Anteile Reduktionsmittel werden während des Färbens verbraucht, da ein Teil des Leukoindigos durch den Luftkontakt in den Luftgängen und an der Färbebadoberfläche oxidiert wird und wieder verküpt werden muß, weshalb auch dem Färbebad geringe Mengen Reduktionsmittel zugesetzt werden.

Nachteilig bei der Verküpung des Indigos mit den genannten Reduktionsmitteln ist die hohe Belastung des Färbeabwassers durch Sulfat (etwa 3500 bis 5000 mg/l, gemessen im Abwasser einer Indigofärberei) im Fall von Natriumdithionit bzw. durch Sauerstoff verbrauchende Substanzen (CSB-Werte von ca. 8000 mg/l, gemessen im Abwasser einer Indigofärberei) im Fall von Hydroxyaceton. Zusätzlich erfordert die Reduktion z.B. mit Natriumdithionit einen hohen Alkalizusatz.

Weiterhin sind auch pulverförmige feste bis pastenartige Präparationen von Leukoindigo bekannt, die als Stabilisatoren Polyhydroxyverbindungen, wie Glycerin und insbesondere von Zuckern abgeleitete Verbindungen, z.B. Melasse, im Gemisch mit Alkali oder Zinkstaub enthalten (DE 200 914 bzw. 235 047). Werden diese Präparationen zum Färben eingesetzt, kann der Sulfatgehalt des Färbeabwassers zwar wirkungsvoll gesenkt werden, jedoch resultiert eine hohe Belastung des Abwassers durch gelöste organische Hydroxyverbindungen, gemessen als TOC (Total Organic Carbon), CSB (Chemischer Sauerstoffbedarf) oder BSB (Biologischer Sauerstoffbedarf); beispielsweise ergibt sich bei einer 60 gew.-%igen Leukoindigopräparation mit 25 Gew.-% Melasse ein CSB-Wert von etwa 8000 mg/l.

Aus der FR-A-360 447 ist auch ein Verfahren zur Herstellung von festen Indigweiß-Präparationen bekannt, bei dem neutrale Lösungen der Alkalisalze von Leukoindigo in möglichst dünnen Schichten zur Trockene eingedampft werden. Die auf diese Weise erhaltenen Produkte weisen jedoch keine Granulatform auf und werden zur Stabilisierung mit ungelöschtem Kalk vermischt.

Schließlich wird in der älteren deutschen Patentanmeldung P 43 10 122.4 ein Färbeverfahren beschrieben, bei dem Indigo in vorreduzierter Form als bei der katalytischen Hydrierung erhaltene, wäßrige, alkalische Lösung eingesetzt wird. Auf diese Weise entfällt die Abwasserbelastung durch organische Substanzen, die Sulfatbelastung wird auf die durch den Luftkontakt während des Färbeprozesses erforderliche Menge Hydrosulfit reduziert. Nachteilig ist jedoch, daß die verwendete Leukoindigolösung oxidationsempfindlich ist und unter striktem Ausschluß von Sauerstoff gehandhabt werden muß.

Der Erfindung lag daher die Aufgabe zugrunde, eine Leukoindigo-Präparation bereitzustellen, welche die genannten Nachteile nicht aufweist und vorteilhaft zum Färben eingesetzt werden kann.

Demgemäß wurden Leukoindigo-Präparationen in Granulatform gefunden, welche als wesentliche Bestandteile Leukoindigo und Alkalihydroxid enthalten.

Außerdem wurde ein Verfahren zur Herstellung dieser Leukonidigo-Präparationen gefunden, welches dadurch gekennzeichnet ist, daß man eine wäßrige alkalische Lösung von Leukoindigo unter Durchmischung und unter Sauerstoffausschluß zur Trockene einengt.

Schließlich wurde die Verwendung der Leukoindigo-Präparationen zum Färben von cellulosehaltigem Textilmaterial gefunden.

Die erfindungsgemäßen Leukoindigo-Präparationen enthalten die wesentlichen Bestandteile Leukoindigo und Alkalihydroxid in einem Molverhältnis von in der Regel 1:1 bis 1:10, bevorzugt 1:1 bis 1:2.

Leukoindigo liegt daher, abhängig vom Alkalihydroxidgehalt, als Mono- oder Di-alkalimetallsalz vor.

Als Beispiele für das Alkalihydroxid sind insbesondere Kaliumhydroxid und vor allem Natriumhydroxid zu nennen.

Wesentlich für die erfindungsgemäßen Leukoindigo-Präparationen ist die Granulatform. In der Regel liegen überwiegend kugelförmige Teilchen mit einer mittleren Teilchengröße von im allgemeinen 0,1 bis 2 mm, vorzugsweise 0,5 bis 1,5 mm vor.

Überraschend ist, daß diese Partikel auch ohne die Anwesenheit von sog. Stabilisatoren oxidationsstabil sind. Sie können problemlos an der Luft gehandhabt und auch kurzzeitig gelagert werden. Für eine längere Lagerung empfehlen sich jedoch geschlossene Gefäße.

Von besonderem Vorteil bei der Herstellung der erfindungsgemäßen Leukoindigo-Präparationen ist, daß man die bei der Herstellung von Leukoindigo durch katalytische Hydrierung anfallende wäßrige Lösung nach dem Klären (u.a. Abtrennen des Katalysators) direkt zur Trocknung einsetzen kann.

Die katalytische Hydrierung selbst kann dabei wie allgemein bekannt beispielsweise durch Reduktion eines alkalischen Indigoteigs (üblicherweise 10 bis 35 Gew.-% Indigo, 2 bis 10 Gew.-% Natriumhydroxid) unter Verwendung von Raney-Nickel als Katalysator bei einem Wasserstoffdruck von im allgemeinen 2 bis 4 bar und einer Temperatur von in der Regel 60 bis 90°C erfolgt sein.

Die erhaltenen Leukoindigolösungen enthalten in der Regel 10 bis 35, bevorzugt 15 bis 30 und besonders bevorzugt 20 bis 25 Gew.-% Leukoindigo.

Beim erfindungsgemäßen Herstellungsverfahren werden die Leukoindigolösungen unter Sauerstoffausschluß, vorteilhaft nach Inertisierung mit einem Schutzgas wie Stickstoff, und unter Durchmischung zur Trockene eingeengt.

Die für die Trocknung erforderlichen Produkttemperaturen richten sich danach, ob unter vermindertem Druck gearbeitet wird oder nicht und betragen üblicherweise 50 bis 80°C bzw. 70 bis 120°C.

Während des Trocknungsprozesses muß eine Durchmischung der Lösung und des anfallenden Feststoffes gewährleistet sein.

Für den großtechnischen Maßstab geeignete Apparate sind daher z.B. Taumeltrockner, Schaufeltrockner und zwangsgereinigte Kontakttrockner, in denen die Trocknung vorzugsweise unter vermindertem Druck (etwa 50 bis 500 mbar) vorgenommen wird. Gegebenenfalls kann eine zusätzliche Grobzerkleinerung im oder außerhalb des Trocknungsapparats vorgenommen werden.

Das erfindungsgemäße Verfahren kann vorteilhaft auch in einer Sprühtrocknungsanlage wie einem Sprühturm und besonders einem Sprühwirbelbett durchgeführt werden, bei dem das Wasser unter Begasung mit heißem Inertgas, bevorzugt Stickstoff, verdampft wird. Das getrocknete Produkt kann hier direkt in der gewünschten Teilchengröße erhalten werden.

Es empfiehlt sich, das getrocknete Produkt vor dem Austrag auf Temperaturen von in der Regel 20 bis 40°C abzukühlen, um eine Reoxidation im heißen Zustand zu vermeiden.

Mit Hilfe des erfindungsgemäßen Verfahrens können die Leukoindigo-Präparationen in Granulatform auf einfache Weise kontinuierlich hergestellt werden. Im allgemeinen enthalten die getrockneten Produkte nur einen Anteil von < 8 Gew.-% an nicht reduziertem Indigo.

Die erfindungsgemäßen Leukoindigo-Präparationen eignen sich vorteilhaft zum Färben von cellulosehaltigem Textilmaterial. Die zu erhaltenden Färbungen entsprechen vollkommen den Anforderungen. Die Abwasserbelastung mit Sulfat sowie der Verbrauch an Alkalihydroxid beim Färben werden drastisch reduziert, lediglich der durch den Luftkontakt während des Färbeprozesses reoxidierte Leukoindigo muß wieder reduziert werden.

### Beispiele

### Herstellung von erfindungsgemäßen Leukoindigo-Präparationen

### Beispiel 1

Eine Lösung aus 20 Gew.-% Leukoindigo, 5 Gew.-% Natriumhydroxid und 75 Gew.-% Wasser wurde langsam in einen mit Stickstoff inertisierten und auf eine Ölbadtemperatur von 130°C aufgeheizten Rotationsverdampfer bei 30 mbar eingeleitet und bei einer Drehgeschwindigkeit von 55 Umin⁻¹ zur Trockene eingeengt. Anschließend wurde auf 40°C abgekühlt.

Das Granulat hatte nach einer Grobzerkleinerung einen mittleren Teilchendurchmesser von 1 mm. Durch Extraktion mit Wasser im Soxleth wurde ein wasserunlöslicher Anteil (Nebenprodukte und nicht reduzierter Indigo) von 4,4 Gew.-% bestimmt.

### Beispiel 2

Eine Lösung aus 20 Gew.-% Leukoindigo, 5 Gew.-% Natriumhydroxid und 75 Gew.-% Wasser wurde in einer mit Stickstoff inertisierten Wirbelschicht bei einer Wirbelgasgeschwindigkeit von 1,2 msec⁻¹ kontinuierlich sprühgranuliert. Die Zugastemperatur betrug 130°C, die Abgastemperatur lag bei 90°C und entsprach der Produkttemperatur in der Wirbelschicht. Das gebildete Granulat wurde über eine Förderschnecke aus der Wirbelschicht ausgetragen und zur Abkühlung auf Raumtemperatur in einen stickstoffgespülten Behälter gefüllt.

Das Granulat der Nutzfraktion hatte einen mittleren Teilchendurchmesser von ca. 1 mm. Der wasserunlösliche Anteil betrug < 5 Gew.-%.

## Patentansprüche

1. Leukoindigo-Präparationen in Granulatform, enthaltend als wesentliche Bestandteile Leukoindigo und Alkalihydroxid.

2. Leukoindigo-Präparationen nach Anspruch 1, bei denen das Molverhältnis von Leukoindigo zu Alkalihydroxid 1:1 bis 1:10 beträgt.

3. Verfahren zur Herstellung der Leukoindigo-Präparationen gemäß Anspruch 1 oder 2, dadurch gekennzeichnet, daß man eine wäßrige alkalische Lösung von Leukoindigo unter Durchmischung und unter Sauerstoffausschluß zur Trockene einengt.

4. Verfahren nach Anspruch 3, dadurch gekennzeichnet, daß man es unter Inertgasatmosphäre und/oder Vakuum durchführt.

5. Verfahren nach Anspruch 3 oder 4, dadurch gekennzeichnet, daß man es in einer Sprühtrocknungsanlage durchführt.

6. Verwendung der Leukoindigo-Präparationen gemäß Anspruch 1 oder 2 zum Färben von cellulosehaltigem Textilmaterial.

## Claims

1. A leucoindigo preparation in granule form consisting essentially of leucoindigo and alkali metal hydroxide.

2. A leucoindigo preparation as claimed in claim 1 wherein the molar ratio of leucoindigo to alkali metal hydroxide is from 1:1 to 1:10.

3. A process for preparing the leucoindigo preparation of claim 1 or 2, which comprises concentrating an aqueous alkaline solution of leucoindigo to dryness under conditions of thorough mixing and oxygen exclusion.

4. A process as claimed in claim 3 carried out in an inert gas atmosphere and/or under reduced pressure.

5. A process as claimed in claim 3 or 4 carried out in a spray drying installation.

6. The use of the leucoindigo preparation of claim 1 or 2 for dyeing cellulose-containing textile material.

## Revendications

1. Préparations de leuco-indigo sous forme de granulés, contenant en tant que constituants essentiels du leuco-indigo et un hydroxyde alcalin.

2. Préparations de leuco-indigo selon la revendication 1, pour lesquelles le rapport en moles du leuco-indigo à l'hydroxyde alcalin est de 1:1 à 1:10.

3. Procédé de fabrication de préparations de leuco-indigo selon la revendication 1 ou 2, caractérisé en ce que l'on concentre jusqu'à siccité une solution alcaline aqueuse de leuco-indigo en mélangeant et en l'absence d'oxygène.

4. Procédé selon la revendication 3, caractérisé en ce que l'on opère sous une atmosphère de gaz inerte et/ou sous vide.

5. Procédé selon la revendication 3 ou 4, caractérisé en ce que l'on opère dans une installation de séchage par pulvérisation.

6. Utilisation de préparations de leuco-indigo selon la revendication 1 ou 2 pour la coloration de matières textiles contenant de la cellulose.
